# EUROPEAN PATENT APPLICATION

(11) **EP 3 751 273 A1**
(43) Date of publication of application: **16.12.2020**
(21) Application number: 19751535.6
(22) Date of filing: 30.01.2019
(51) Int. Cl.: G01N 27/62, H01J 49/04, H01J 49/16

(54) **IONIZATION METHOD AND SAMPLE SUPPORT**

(30) Priority: 09.02.2018 JP 2018021902
(71) Applicant: HAMAMATSU PHOTONICS K.K., Hamamatsu-shi, Shizuoka 435-8558 (JP)
(72) Inventor: KOTANI, Masahiro, Hamamatsu-shi, Shizuoka 435-8558 (JP); OHMURA, Takayuki, Hamamatsu-shi, Shizuoka 435-8558 (JP)
(74) Representative: Grünecker Patent- und Rechtsanwälte PartG mbB
(86) International application number: PCT/JP2019/003229
(87) International publication number: WO 2019/155967

(57) **Abstract**

Provided is an ionization method that includes: a first process of preparing a sample support that includes a substrate formed with a plurality of through-holes opening to a first surface and a second surface and a conduction layer provided on at least the first surface; a second process of dropping a solution including a sample to the second surface in a state in which the sample support is supported such that the second surface is located above; a third process of moving components of the sample from a side of the second surface into the plurality of through-holes in the state in which the sample support is supported such that the second surface is located above, and drying the components of the sample; and a fourth process of applying a laser beam (L) to the first surface while applying a voltage to the conductive layer, and thus ionizing the components of the sample.

## Description

### Technical Field

The present disclosure relates to an ionization method and a sample support.

### Background Art

Conventionally, a sample support for ionizing a sample in mass spectrometry of a sample such as a biological sample is known (e.g., see Patent Literature 1). This sample support includes a substrate formed with a plurality of through-holes opening to a first surface and a second surface opposite to each other.

### Citation List

### Patent Literature

Patent Literature 1: Japanese Patent No. 6093492

### Summary of Invention

### Technical Problem

In the mass spectrometry as described above, the ionized sample (sample ions) is detected, and the mass spectrometry of the sample is performed on the basis of the detection result. In this mass spectrometry, an improvement in signal intensity (sensitivity) is desired.

Therefore, the present disclosure is directed to providing an ionization method and a sample support capable of improving signal intensity when sample ions are detected.

### Solution to Problem

An ionization method relating to a first aspect of the present disclosure includes: a first process of preparing a sample support that includes a substrate formed with a plurality of through-holes opening to a first surface and a second surface opposite to each other, and a conductive layer that is provided on at least the first surface and has a lower affinity with water than the second surface; a second process of dropping a solution including a sample to the second surface in a state in which the sample support is supported such that the second surface is located above the first surface; a third process of moving components of the sample from a side of the second surface into the plurality of through-holes in the state in which the sample support is supported such that the second surface is located above the first surface, and drying the components of the sample moved into the plurality of through-holes; and a fourth process of applying an energy beam to the first surface while applying a voltage to the conductive layer, and thus ionizing the components of the sample.

In the ionization method relating to the first aspect, in the state in which the sample support is supported such that the second surface is located above the first surface, a solution including a sample (hereinafter referred to as "sample solution") is dropped onto the second surface. Here, since the conductive layer having a lower affinity with water than the second surface is provided on the first surface, t the sample solution can be made to smoothly flow into the through-holes by dropping the sample solution onto the second surface, compared to the case where the sample solution is dropped onto the first surface (the conductive layer). Further, components of the sample can be dried while curbing outflow of the sample solution from the side of the first surface by the conductive layer provided on the first surface. Thus, since the components of the sample can be appropriately introduced into the through-holes, signal intensity when the components ionized by application of an energy beam are detected can be improved.

In the ionization method relating to the first aspect, the first process may include preparing the sample support in which a hydrophilic coating layer is provided on the second surface and an inner surface of a portion including an edge of each through-hole on the second surface side. In this case, inflow of the sample solution dropped onto the second surface into the through-holes can be effectively accelerated by the hydrophilic coating layer.

In the ionization method relating to the first aspect, the first process may include preparing the sample support in which a hydrophobic coating layer having a lower affinity with water than the conductive layer is provided on a surface of the conductive layer which is located at a side opposite to the substrate. In this case, outflow of the sample solution from the side of the first surface can be effectively curbed by the hydrophobic coating layer.

An ionization method relating to a second aspect of the present disclosure includes: a first process of preparing a sample support that includes a substrate which has conductivity and which is formed with a plurality of through-holes opening to a first surface and a second surface opposite to each other, wherein a surface of the sample support on the first surface side has a lower affinity with water than a surface of the sample support on the second surface side; a second process of dropping a solution including a sample to the second surface in a state in which the sample support is supported such that the second surface is located above the first surface; a third process of moving components of the sample from a side of the second surface into the plurality of through-holes in the state in which the sample support is supported such that the second surface is located above the first surface, and drying the components of the sample moved into the plurality of through-holes; and a fourth process of applying an energy beam to the first surface while applying a voltage to the conductive layer, and thus ionizing the components of the sample.

According to the ionization method relating to the second aspect, the conductive layer can be omitted in the sample support, and the same effects as the case where the sample support having the aforementioned conductive layer is used can be obtained.

In the ionization method relating to the second aspect, the first process may include preparing the sample support in which a hydrophilic coating layer is provided on the second surface and an inner surface of a portion including an edge of each through-hole on the second surface side. In this case, inflow of the sample solution dropped onto the second surface into the through-holes can be effectively accelerated by the hydrophilic coating layer.

In the ionization method relating to the second aspect, the first process may include preparing the sample support in which a hydrophobic coating layer is provided on the first surface. In this case, outflow of the sample solution from the side of the first surface can be effectively curbed by the hydrophobic coating layer.

In the first and second ionization methods, the sample support may be provided with a plurality of measurement regions that are separated from one another when viewed in a thickness direction of the substrate; the plurality of through-holes may be formed in each of the plurality of measurement regions; the second process may include dropping the solution including the sample to the plurality of measurement regions on the second surface; and the fourth process may include applying the energy beam to each of the measurement regions, and ionizing the components of the sample in each of the measurement regions. In this case, ionization and measurement of the plurality of samples (i.e., the sample solution dropped onto each of the measurement regions) can be efficiently performed using the plurality of measurement regions.

Further, the sample support may include a supporting substrate that supports the substrate at the side of the second surface, and the supporting substrate may include a plurality of through portions passing through the supporting substrate in a thickness direction of the supporting substrate in correspondence to the plurality of measurement regions. In this case, handleability of the sample support can be improved by the supporting substrate. Further, the plurality of measurement regions are partitioned by the supporting substrate, and thus the sample solution can be easily dropped onto each of the measurement regions in the second process.

Further, the through portions may have tapered shapes in which widths thereof are widened as they go away from the second surface. In this case, in comparison with a case where the through portions do not have the tapered shapes (e.g., a case where the through portions have pillar shapes), openings of the through portions at the side at which the sample solution is dropped can be expanded. Thus, accuracy required when the sample solution is dropped in the second process (accuracy relevant to a dropping position) can be relieved.

Further, the ionization method may further include a process of mounting the sample support on the mounting surface of a mounting portion such that the second surface faces the mounting surface between an end of the third process and a start of the fourth process. In this case, after the third process, the sample support is inverted such that the second surface is located below, and is then mounted on the mounting surface. Thus, since the side of the first surface can be exposed upward while the sample support is stably supported by the mounting portion, the energy beam can be appropriately applied in the fourth process.

A sample support relating to a first aspect of the present disclosure includes: a substrate formed with a plurality of through-holes opening to a first surface and a second surface opposite to each other; a conductive layer that is provided on at least the first surface and has a lower affinity with water than the second surface; and a supporting substrate configured to support the substrate at a side of the second surface. The supporting substrate includes a plurality of through portions passing through the supporting substrate in correspondence to a plurality of measurement regions that are separated from one another when viewed in a thickness direction of the substrate, and the plurality of measurement regions are regions including the plurality of through-holes when viewed in the thickness direction of the substrate.

In the sample support relating to the first aspect, the conductive layer having a lower affinity with water than the second surface is provided on the first surface. For this reason, for example, the sample solution is dropped onto the second surface, and thus the sample solution can be made to smoothly flow into the through-holes, compared to the case where the sample solution is dropped onto the first surface (the conductive layer). Further, due to the conductive layer provided on the first surface, the components of the sample can be dried while curbing outflow of the sample solution from the side of the first surface. Thus, since the components of the sample can be appropriately introduced into the through-holes, signal intensity can be improved when the components ionized by the application of the laser beam are detected. Further, in the sample support, due to the supporting substrate provided at the side of the second surface, handleability of the sample support is improved. Furthermore, the plurality of measurement regions are partitioned by the supporting substrate, and thus the sample solution can be easily dropped onto each of the measurement regions. Therefore, according to the sample support, the plurality of samples (i.e., the sample solution dropped onto each of the measurement regions) can be efficiently and easily ionized.

A sample support relating to a second aspect of the present disclosure includes: a substrate which has conductivity and is forms with a plurality of through-holes opening to a first surface and a second surface opposite to each other; and a supporting substrate configured to support the substrate at a side of the second surface. A surface of the sample support on the first surface side has a lower affinity with water than a surface of the sample support on the second surface side. The supporting substrate includes a plurality of through portions corresponding to a plurality of measurement regions that are separated from one another when viewed in a thickness direction of the substrate. The plurality of measurement regions are regions including the plurality of through-holes when viewed in the thickness direction of the substrate.

According to the sample support relating to the second aspect, the conductive layer can be omitted in the sample support, and the same effects as the sample support having the aforementioned conductive layer can be obtained.

In the sample support relating to the first or second aspect, the through portions may have tapered shapes in which widths thereof are widened as they go away from the second surface. In this case, in comparison with a case where the through portions do not have the tapered shapes (e.g., a case where the through portions have pillar shapes), the solution can be easily dropped onto the side of the second surface. That is, openings of the through portions at the side at which the sample solution is dropped can be expanded. Thus, accuracy required when the sample solution is dropped in the second process (accuracy relevant to a dropping position of the solution) can be relieved.

### Advantageous Effects of Invention

According to the present disclosure, an ionization method and a sample support capable of improving signal intensity when sample ions are detected can be provided.

### Brief Description of Drawings

FIG. 1 is a plan view of a sample support of a first embodiment.
FIG. 2 is a sectional view of the sample support along line II-II of FIG. 1.
FIG. 3 is an enlarged sectional view of key parts of broken line portion A of FIG. 2.
FIG. 4 is a view illustrating an enlarged image of a substrate of the sample support illustrated in FIG. 1.
FIG. 5 is a view illustrating a process of a mass spectrometry method of an embodiment.
FIG. 6 is a view illustrating a process of the mass spectrometry method of the embodiment.
FIG. 7 is a configuration diagram of a mass spectrometer of an embodiment.
FIG. 8 is a view illustrating mass spectrometry results of an example and a comparative example.
FIG. 9 is an enlarged sectional view of key parts of a sample support of a second embodiment.
FIG. 10 is a sectional view of a sample support of a third embodiment.
FIG. 11 is a view illustrating a second process in a case where the sample support illustrated in FIG. 10 is used.

### Description of Embodiments

Hereinafter, embodiments of the present disclosure will be described in detail with reference to the drawings. Note that the same or equivalent portions are denoted by the same reference signs in each of the drawings, and duplicate descriptions thereof will be omitted. Further, dimensions of each member (or each region) illustrated in the drawings or a ratio of the dimensions may be different from actual dimensions or a ratio of the actual dimensions in order to facilitate an understanding of the description.

### [First embodiment]

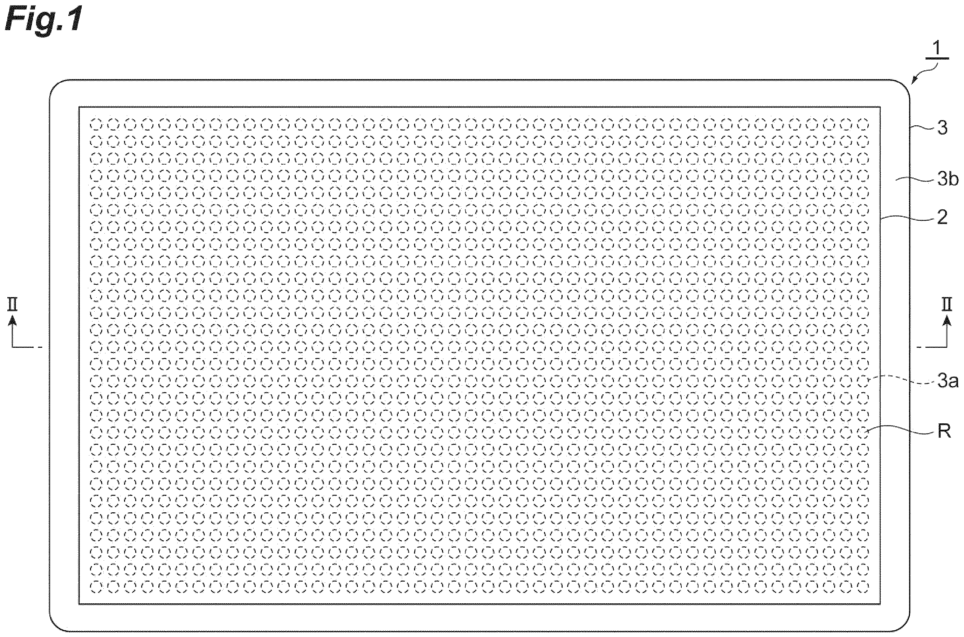

First, a sample support used in a mass spectrometry method (including an ionization method) of an embodiment will be described. As illustrated in FIGS. 1 to 3, a sample support 1 includes a substrate 2, a frame (a supporting substrate) 3, and a conductive layer 4. The sample support 1 is for ionization of a sample. For example, when mass spectrometry is performed, the sample support 1 is used to ionize components of a sample to be measured. The substrate 2 has a first surface 2a and a second surface 2b opposite to each other. A plurality of through-holes 2c are formed in the substrate 2 in a uniform manner (with uniform distribution). Each of the through-holes 2c extends in a thickness direction of the substrate 2 (a direction perpendicular to the first surface 2a and the second surface 2b), and opens to the first surface 2a and the second surface 2b.

The substrate 2 is formed of, for instance, an insulating material in the shape of a rectangular plate. When viewed in the thickness direction of the substrate 2, a length of one side of the substrate 2 is, for instance, several centimeters or so, and a thickness of the substrate 2 is, for instance, about 1 µm to 50 µm. When viewed in the thickness direction of the substrate 2, shapes of the through-holes 2c are, for instance, nearly circular shapes. Widths of the through-holes 2c are, for instance, about 1 nm to 700 nm. The width of the through-hole 2c is a diameter of the through-hole 2c in a case where, when viewed in the thickness direction of the substrate 2, the shape of the through-hole 2c is the nearly circular shape, and is a diameter (effective diameter) of virtual maximum column fitted into the through-hole 2c in a case where the shape is other than the nearly circular shape.

The frame 3 is provided on the second surface 2b of the substrate 2, and supports the substrate 2 at the side of the second surface 2b. For example, the frame 3 is fixed to the second surface 2b of the substrate 2 by an adhesion material or the like. For example, an adhesion material (e.g., a low melting point glass, an adhesive for vacuum, etc.) having little discharge gas can be used as the adhesion material. When viewed in the thickness direction of the substrate 2, the frame 3 is formed in the shape of a rectangular plate larger than the substrate 2. A plurality of through portions 3a passing through the frame 3 in a thickness direction of the frame 3 (i.e., the thickness direction of the substrate 2) are formed in the frame 3. As illustrated in FIG. 1, the plurality of through portions 3a are arranged, for instance, in a lattice shape. Portions of the substrate 2 which correspond to the through portions 3a function as measurement regions R for performing measurement (ionization) of a sample. One through portion 3a corresponds to one measurement region R. The measurement regions R function as regions for moving a solution including a sample, which is dropped onto the substrate 2 from the side of the second surface 2b, to the side of the first surface 2a via a plurality of through-holes 2c provided in the measurement regions R due to a gravitational force and a capillary phenomenon.

The frame 3 is formed of, for instance, a magnetic metal material (e.g., stainless steel (SUS 400 series) in the shape of a rectangular plate. When viewed in the thickness direction of the substrate 2, a length of one side of the frame 3 is, for instance, about several centimeters to 200 cm, and a thickness of the frame 3 is, for instance, 3 mm or less. When viewed in the thickness direction of the substrate 2, shapes of the through portions 3a are, for instance, circular shapes. In that case, diameters of the through portions 3a are, for instance, about several millimeters to tens of millimeters. An intercentral distance (a pitch) between the neighboring through portions 3a are, for instance, about several millimeters to tens of millimeters. In the present embodiment, as an example, diameters of the through portions 3a are 1.6 mm, and the pitch between the neighboring through portions 3a is 2.3 mm. Due to this frame 3, handling of the sample support 1 is facilitated, and deformation of the substrate 2 caused by, for instance, a change in temperature is curbed.

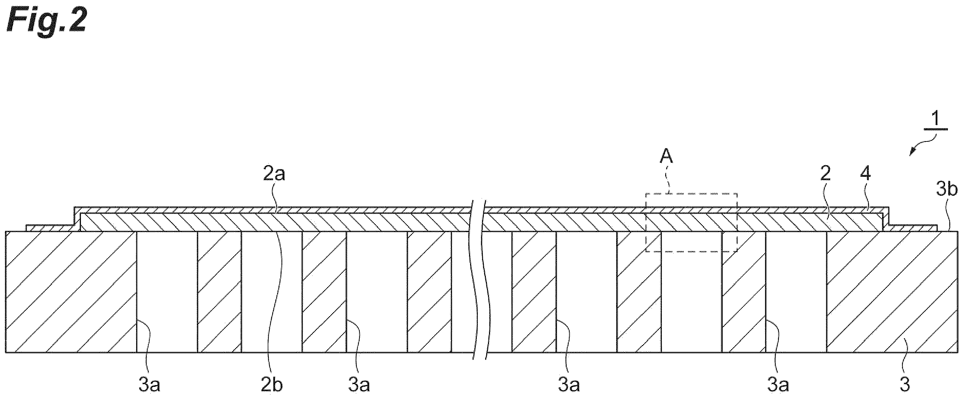

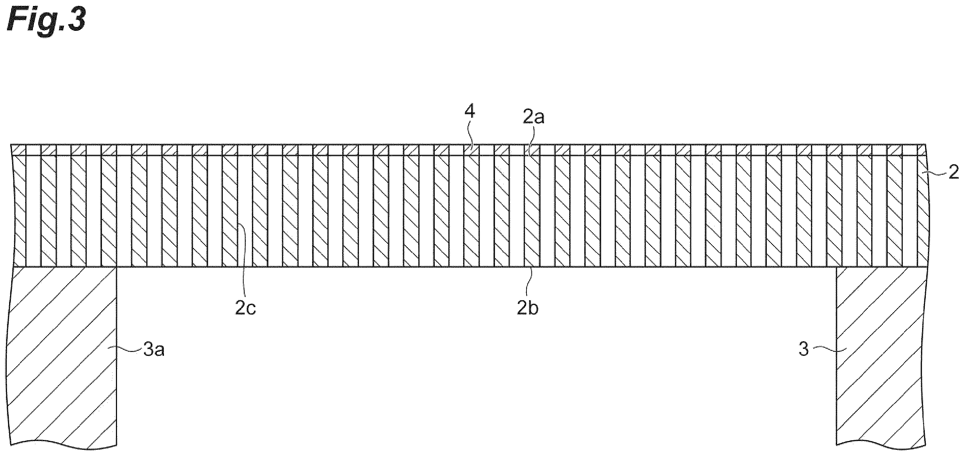

The conductive layer 4 is provided on the first surface 2a of the substrate 2. To be specific, as illustrated in FIG. 2, the conductive layer 4 is continuously (integrally) formed on the first surface 2a of the substrate 2, a lateral surface of the substrate 2, and a portion of a surface 3b of the frame 3 at the side of the substrate 2 (a portion located outside the substrate 2 when viewed in the thickness direction of the substrate 2). In the example of FIG. 2, the conductive layer 4 is not formed at an edge of the surface 3b of the frame 3, but the conductive layer 4 may also be formed at the edge of the surface 3b of the frame 3. As illustrated in FIG. 3, the conductive layer 4 covers a portion of the first surface 2a of the substrate 2 at which the through-holes 2c are not formed in the measurement regions R. That is, openings of the through-holes 2c at the side of the conductive layer 4 are not blocked by the conductive layer 4.

The conductive layer 4 is formed of a conductive material. As a material of the conductive layer 4, for the reason to be described below, a metal having a low affinity (reactivity) with a sample and high conductivity is preferably used.

For example, if the conductive layer 4 is formed of a metal such as copper (Cu) that has a high affinity with a sample such as a protein, the sample is ionized in a state in which Cu atoms are attached to sample molecules in a process (to be described below) of ionizing the sample, and detection results are likely to deviate by an attached amount of the Cu atoms in a mass spectrometry method (to be described below). Therefore, as the material of the conductive layer 4, a metal having a low affinity with a sample is preferably used.

Meanwhile, a constant voltage is easily applied to a metal having higher conductivity in an easy and stable way. For this reason, if the conductive layer 4 is formed of a high-conductivity metal, a voltage can be uniformly applied to the first surface 2a of the substrate 2 in the measurement regions R. Further, a metal having higher conductivity also shows a tendency to have higher thermal conductivity. For this reason, if the conductive layer 4 is formed of a high-conductivity metal, energy of an energy beam (e.g., a laser beam) applied to the substrate 2 can be efficiently transmitted to a sample via the conductive layer 4. Therefore, as the material of the conductive layer 4, a high-conductivity metal is preferably used.

In view of the above, for example, gold (Au), platinum (Pt), or the like is used as the material of the conductive layer 4. For example, the conductive layer 4 is formed at a thickness of about 1 nm to 350 nm using a plating method, an atomic layer deposition (ALD) method, a vapor deposition method, a sputtering method, or the like. For example, chromium (Cr), nickel (Ni), titanium (Ti), or the like may be used as the material of the conductive layer 4.

Further, the conductive layer 4 has a lower affinity with water than the second surface 2b of the substrate 2. Thus, a surface of the sample support 1 on the second surface 2b side (here, the second surface 2b) has a higher affinity with water than a surface of the sample support 1 on the first surface 2a side (here, an outer surface of the conductive layer 4). That is, it is easier for a solution including a sample to flow into the through-holes 2c at the side of the second surface 2b than at the side of the first surface 2a. Further, it is more difficult for a solution including a sample to flow out of the through-holes 2c at the side of the first surface 2a than at the side of the second surface 2b.

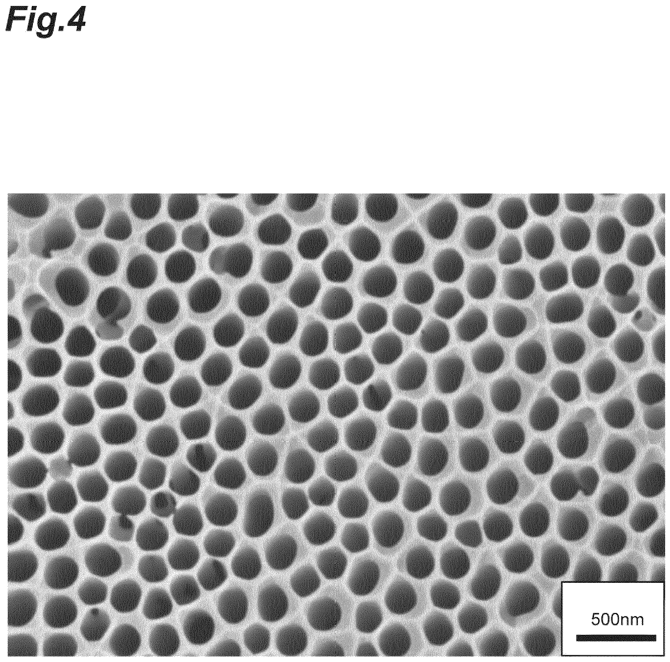

FIG. 4 is a view illustrating an enlarged image of the substrate 2 when viewed in the thickness direction of the substrate 2. In FIG. 4, black portions are the through-holes 2c, and each white portion is a partition portion between the through-holes 2c. As illustrated in FIG. 4, the plurality of through-holes 2c having approximately constant widths are uniformly formed in the substrate 2. An aperture ratio of the through-holes 2c in one measurement region R (a ratio of the through-holes 2c to the measurement region R when viewed in the thickness direction of the substrate 2) ranges from 10% to 80% in view of practical use, and particularly preferably ranges from 60% to 80%. The sizes of the plurality of through-holes 2c may not be even with one another, and the plurality of through-holes 2c may be partly coupled to one another.

The substrate 2 illustrated in FIG. 4 is an alumina porous film formed by anodizing aluminum (Al). For example, by performing anodizing treatment on an Al substrate, a surface portion of the Al substrate is oxidized, and a plurality of pores (intended portions that become the through-holes 2c) are formed in the surface portion of the Al substrate. Next, the oxidized surface portion (the anodized film) is peeled from the Al substrate, and pore widening treatment that widens widths of the pores is performed on the peeled anodized film, and thus the aforementioned substrate 2 is obtained. The substrate 2 may be formed by anodizing a valve metal other than Al, such as tantalum (Ta), niobium (Nb), titanium (Ti), hafnium (Hf), zirconium (Zr), zinc (Zn), tungsten (W), bismuth (Bi), antimony (Sb), or the like, or by anodizing silicon (Si).

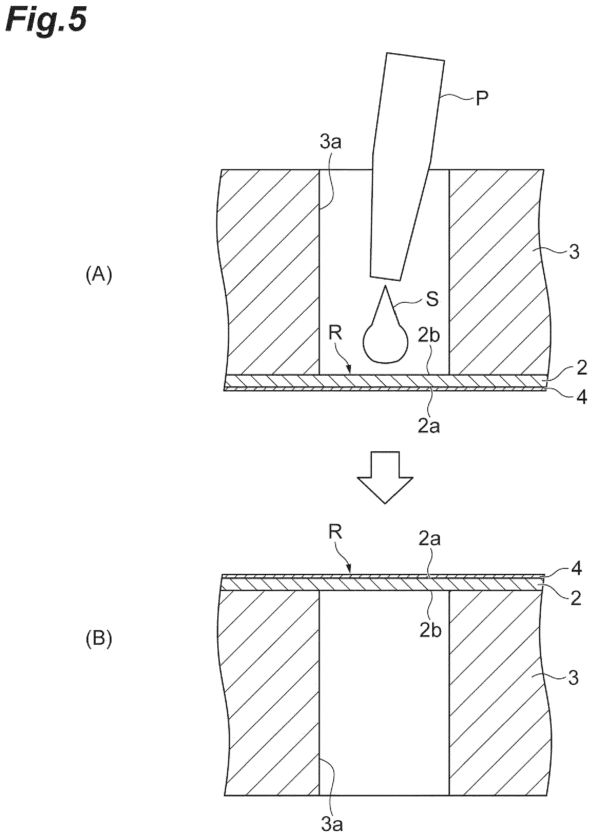

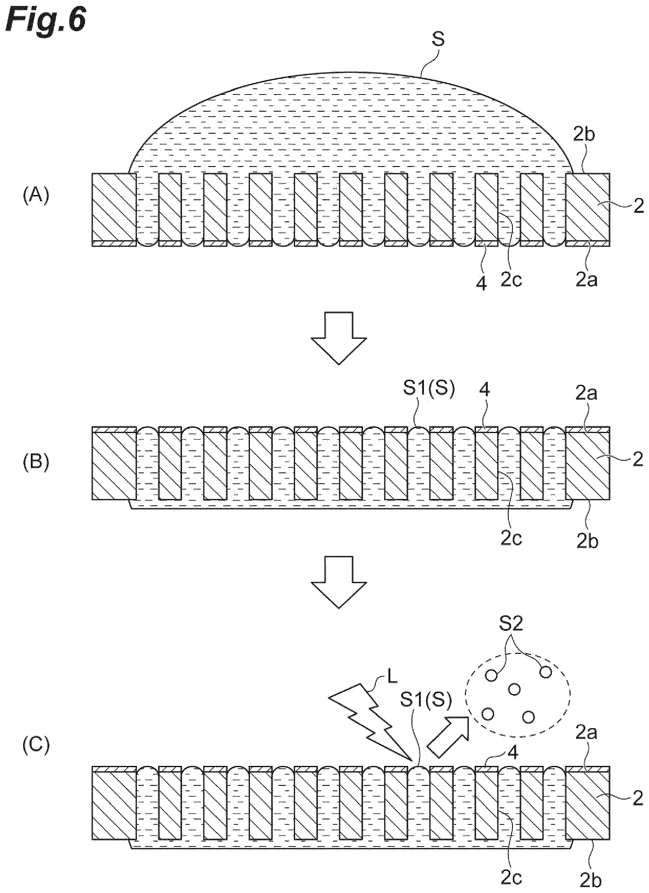

Next, a sample ionization method for a sample using the sample support 1 will be described with reference to FIGS. 5 and 6. Here, as an example, a laser desorption/ionization method (a part of a mass spectrometry method using a mass spectrometer 10) using a laser beam as an energy beam applied for ionization of a sample will be described.

First, the aforementioned sample support 1 is prepared (a first process). The sample support 1 may be prepared by being produced by a person who carries out the mass spectrometry method, or be prepared by being obtained from a producer or a seller of the sample support 1.

Next, as illustrated in (a) of FIG. 5, in a state in which the sample support 1 is supported such that the second surface 2b is located above the first surface 2a, a solution including a sample S (hereinafter referred to as "sample solution") is dropped onto the second surface 2b (a second process). The sample solution is dropped toward each through portion 3a of the frame 3 (i.e., each measurement region R), for instance, by a pipette P. The sample solution may be manually dropped by an operator, or be mechanically dropped by a device. The sample solution is dropped onto each of the plurality of measurement regions R on the second surface 2b of the substrate 2 in the second process.

Next, in the state in which the sample support 1 is supported such that the second surface 2b is located above the first surface 2a, components S1 of the sample S are moved from the side of the second surface 2b into the plurality of through-holes 2c, and the components S1 of the sample S moved into the plurality of through-holes 2c are dried (a third process). To be specific, as illustrated in (a) of FIG. 6, after the second process, the state in which the second surface 2b is located above the first surface 2a is maintained, and thus the sample solution moves into the through-holes 2c due to a gravitational force and a capillary phenomenon, and the components S1 of the sample included in the sample solution are dried. Here, since the second surface 2b has a higher affinity with water than the conductive layer 4, the sample solution can be made to smoothly flow into the through-holes 2c by dropping the sample solution onto the second surface 2b, compared to the case where the sample solution is dropped onto the first surface 2a (the conductive layer 4). Further, the components S1 of the sample S can be dried while curbing outflow of the sample solution from the side of the first surface 2a (movement along a surface of the conductive layer 4) by the conductive layer 4 provided on the first surface 2a.

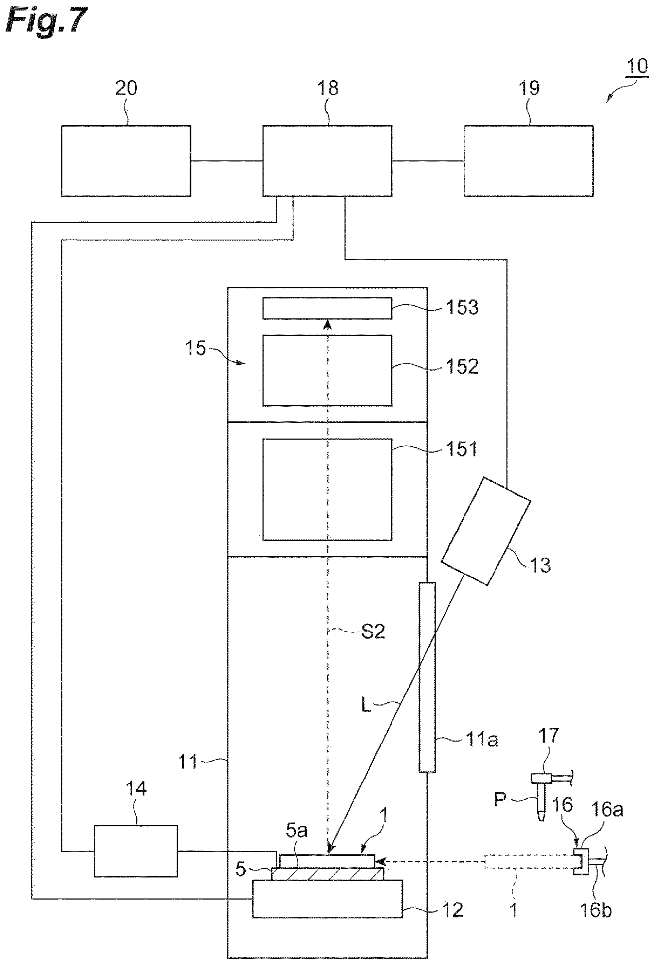

Next, as illustrated in (b) of FIG. 5 and (b) of FIG. 6, the sample support 1 is inverted such that the first surface 2a is located above the second surface 2b, and is mounted on a mounting surface 5a of a holding substrate 5 (see FIG. 7) in the state in which the first surface 2a is located above the second surface 2b. That is, the sample support 1 is mounted on the mounting surface 5a such that the second surface 2b faces the mounting surface 5a. The holding substrate 5 (a mounting portion) is, for instance, a magnetic metal material (e.g., a substrate formed of, for instance, stainless steel 400 series). Alternatively, the holding substrate 5 is preferably a magnet holder for fixing the frame 3. A material of the magnet holder is, for instance, ferrite, Alnico, or the like. Further, the sample support 1 and the holding substrate 5 are mounted on a support 12 (see FIG. 7) of the mass spectrometer 10 (to be described below) (see FIG. 7).

Next, as illustrated in (c) of FIG. 6, a laser beam L is applied to the first surface 2a while a voltage is applied to the conductive layer 4, and thus the components S1 of the sample S are ionized (a fourth process). To be specific, the components S1 that stay in the through-holes 2c of the substrate 2 (especially, at the side of the first surface 2a) are ionized, and sample ions S2 (the ionized components S1) are discharged. To be more specific, energy of the laser beam L is transmitted from the conductive layer 4 (see FIG. 2) absorbing the energy of the laser beam L to the components S1 of the sample S which stay in the through-holes 2c, and the components S1 of the sample S which obtain the energy are evaporated, and obtain electric charges to become the sample ions S2. The above first to fourth processes are equivalent to the ionization method (here, the laser desorption/ionization method) for the sample S using the sample support 1.

The discharged sample ions S2 are drawn into a mass separator 152 (see FIG. 7) by a pressure difference between the side of the support 12 (see FIG. 7) and an ion detection part 15 (see FIG. 7) and an electric field of an ion guide 151 (see FIG. 7). The sample ions S2 are separated in the mass separator 152 in accordance with mass thereof. The sample ions S2 separated in accordance with mass thereof are detected by an ion detector 153 (see FIG. 7) (a fifth process). Here, the mass spectrometer 10 is a mass spectrometer using time-of-flight mass spectrometry (TOF-MS). The above first to fifth processes are equivalent to the mass spectrometry method using the sample support 1.

The fourth and fifth processes are performed on each of the measurement regions R. That is, in the fourth process, the laser beam L is applied to each of the measurement regions R, and the components S1 are ionized in each of the measurement regions R. Further, the components S1 (the sample ions S2) ionized in this way are detected in each of the measurement regions R by the ion detector 153. Thus, mass analysis results (e.g., a mass spectrum) are obtained in each of the measurement regions R.

In keeping with the configuration and the mass spectrometry method of the sample support 1 described above, a mass spectrometer of an embodiment will be described. As illustrated in FIG. 7, the mass spectrometer 10 includes a chamber 11, a support 12, a laser beam application part 13, a voltage application part 14, an ion detection part 15, a supporting mechanism 16, a sample dropper 17, a controller 18, an operation part 19, and a display part 20.

The chamber 11 provides an evacuated space. The support 12 supports the holding substrate 5 and the sample support 1 in the space inside the chamber 11 in a state in which the sample support 1 is mounted on the holding substrate 5. The support 12 is, for instance, a stage that is moved along a plane perpendicular to the thickness direction of the substrate 2.

In the fourth process, the laser beam application part 13 applies the laser beam L to the first surface 2a of the sample support 1 supported on the support 12 via a window 11a provided on the chamber 11. The laser beam L is, for instance, a beam having a wavelength of an ultraviolet region.

In the fourth process, the voltage application part 14 applies a voltage to the conductive layer 4 (see FIG. 2) of the sample support 1 supported on the support 12, for instance, via the mounting surface 5a of the holding substrate 5 and a conductive member (not illustrated). The conductive member is, for instance, a tape that has conductivity and connects the mounting surface 5a and the conductive layer 4 (e.g., a portion above the surface 3b of the frame 3). As described above, the conductive layer 4 extends not only on the first surface 2a of the substrate 2 but also to the surface 3b of the frame 3, and thus the conductive layer 4 and the tape can be made to be conducting on the surface 3b of the frame 3. For this reason, without reducing an effective region of the substrate 2 (a region in which the through-holes 2c are provided and which can be used for measurement), a voltage can be applied to the conductive layer 4.

In the fifth process, the ion detection part 15 detects the sample ions S2 (i.e., the components S1 of the sample S which are ionized by applying the laser beam L to the first surface 2a while a voltage is applied to the conductive layer 4) in the space inside the chamber 11. When the laser beam L is applied to the first surface 2a while a voltage is applied to the conductive layer 4, the components S1 of the sample S are in a state in which they move toward the first surface 2a via the plurality of through-holes 2c due to a capillary phenomenon and are dried.

In the mass spectrometer 10, the support 12 is operated by the controller 18. Thus, the laser beam application part 13 scans and applies the laser beam L on and to each of the measurement regions R, and the ion detection part 15 detects the sample ions S2 regarding each of the measurement regions R. At least one of the support 12 and the laser beam application part 13 is operated by the controller 18, and the scanning of the laser beam L on each of the measurement regions R can be performed.

The ion detection part 15 has the ion guide 151, the mass separator 152, and the ion detector 153. The sample ions S2 discharged to the space inside the chamber 11 are drawn into the mass separator 152 by a pressure difference between the side of the support 12 and the side of the ion detection part 15 and an electric field of the ion guide 151. The sample ions S2 are separated in the mass separator 152 according to mass. The sample ions S2 separated according to mass are detected by the ion detector 153.

The supporting mechanism 16 supports the sample support 1, and inverts the sample support 1. For example, the supporting mechanism 16 includes a gripper 16A that grips a side of the sample support 1 (e.g., an edge of the frame 3), and an arm 16B that is connected to the gripper 16A. The arm 16B is telescopically configured. In the present embodiment, as an example, the arm 16B is expanded or contracted, and thereby the sample support 1 gripped by the gripper 16A can be moved from a sample dropping position (a position denoted by a broken line in FIG. 7) to a position above the support 12 (a position denoted by a solid line in FIG. 7). Further, the arm 16B is configured to be rotatable about an axial direction thereof. Due to the rotation of the arm 16B, the sample support 1 can be inverted.

The sample dropper 17 holds the pipette P in which the sample solution is contained, is operated by the controller 18, and thus drops the sample solution inside the pipette P to a designated position.

For example, in the second process, the supporting mechanism 16 supports the sample support 1 at the sample dropping position such that the second surface 2b is located above the first surface 2a. In this state, the sample dropper 17 drops the sample solution to each of the through portions 3a of the frame 3 (i.e., each of the measurement regions R). For example, the sample dropper 17 is operated by the controller 18, and thus drops the sample solution to each of the measurement regions R from a tip of the pipette P while successively moving the pipette P to a position above each of the measurement regions R. Thus, the sample solution is dropped onto each of the plurality of measurement regions R.

For example, after the third process, the supporting mechanism 16 inverts the sample support 1 such that the first surface 2a is located above the second surface 2b. Afterwards, the supporting mechanism 16 moves the sample support 1 from the sample dropping position to a position above the support 12, releases the grip of the sample support 1 from the gripper 16A, and thus mounts the sample support 1 on the support 12 (here, on the holding substrate 5).

The controller 18 controls operations of the parts of the mass spectrometer 10, and performs a mass analysis (e.g., a spectrum analysis) of the molecules of which the sample S is composed on the basis of the detection results of the sample ions S2 from the ion detection part 15. The controller 18 is configured as a computer device that includes a processor, a memory, a storage, and a communication device. The operation part 19 is an interface for an operator inputting an instruction or the like. The display part 20 is a display that displays the mass analysis results of the molecules of which the sample S is composed.

As described above, in the ionization method, in the state in which the sample support 1 is supported such that the second surface 2b is located above the first surface 2a, the solution (the sample solution) including the sample S is dropped onto the second surface 2b. Here, since the conductive layer 4 having a lower affinity with water than the second surface 2b is provided on the first surface 2a, the sample solution is dropped to the second surface 2b, and thus the sample solution can be made to smoothly flow into the through-holes 2c, compared to the case where the sample solution is dropped to the first surface 2a (the conductive layer 4). Further, the components S1 of the sample S can be dried while curbing outflow of the sample solution from the side of the first surface 2a by the conductive layer 4 provided on the first surface 2a. Thus, since the components S1 of the sample S can be appropriately introduced into the through-holes 2c, signal intensity when the components S1 ionized by the application of the energy beam (the laser beam L in the present embodiment) are detected (i.e., signal intensity detected by the ion detection part 15) can be improved.

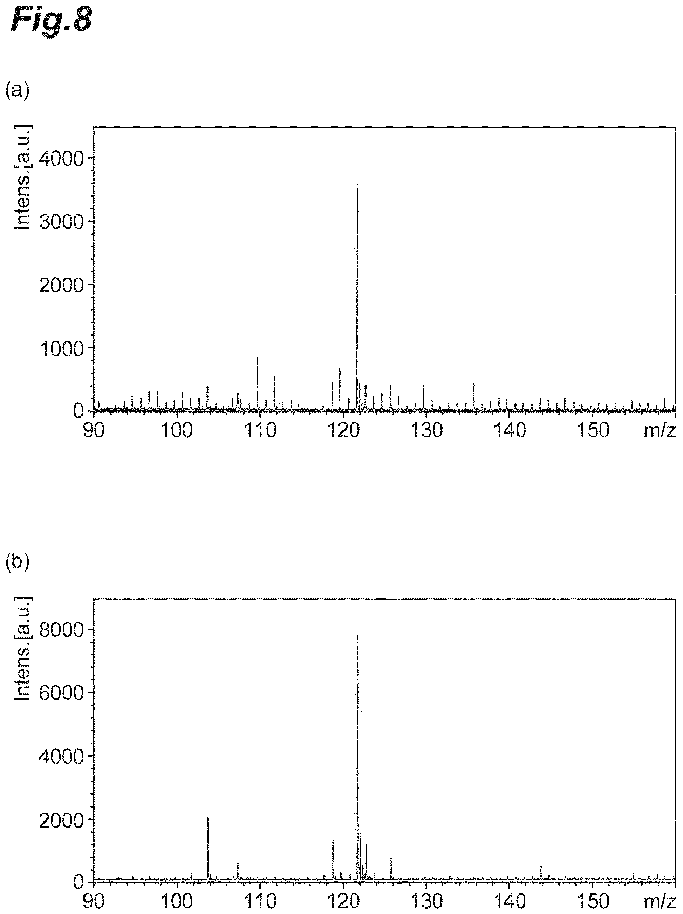

The above effects will be described in detail with reference to FIG. 8. (a) of FIG. 8 illustrates a mass spectrum obtained by a mass spectrometry method of a comparative example (hereinafter referred to simply as "comparative example"), and (b) of FIG. 8 illustrates a mass spectrum obtained by the mass spectrometry method of the above embodiment (hereinafter "example"). In any case, a sample solution including acetylcholinesterase (AChE) as a sample S was used. The comparative example is different from the example in that the following processes were performed instead of the above second and third processes. That is, in the comparative example, in the state in which the sample support 1 was supported such that the first surface 2a was located above the second surface 2b, the sample solution was dropped onto the first surface 2a (the conductive layer 4). Here, to allow the sample solution to flow into the through-holes 2c, an organic solvent (e.g., acetonitrile) for reducing surface tension was mixed with the sample solution. Next, in the state in which the sample support 1 was supported such that the first surface 2a was located above the second surface 2b, the components S1 of the sample S were moved from the side of the first surface 2a into the plurality of through-holes 2c, and the components S1 of the sample S moved into the plurality of through-holes 2c were dried. That is, in the comparative example, dropping and drying of the sample were performed from the side of the first surface 2a that was a side at which a laser beam L was applied while maintaining a state in which the side of the first surface 2a was an upper surface. Subsequent application of the laser beam L (the above fourth process) was performed in the same way as for the example.

As illustrated in (a) of FIG. 8, in the comparative example, results that signal intensity was relatively low and noise was relatively large were obtained. In contrast, as illustrated in (b) of FIG. 8, in the example, results that signal intensity was relatively high and noise was relatively small were obtained. Further, in the example, it was confirmed that, even if an organic solvent for reducing surface tension of the sample solution as in the comparative example was not added, the sample solution could be appropriately introduced into the through-holes 2c, and the signal intensity was improved compared with the comparative example in which the organic solvent was added.

Further, in the mass spectrometry method of the present embodiment, since the sample solution can be relatively smoothly introduced into the through-holes 2c from the side at which an affinity with water is relatively high (the side of the second surface 2b), and outflow of the sample solution from the side at which an affinity with water is relatively low (the side of the first surface 2a) can be curbed, the through-holes 2c can be caused to function like test tubes. For example, a plurality of solutions (e.g., a sample solution including a sample S to be measured and a matrix solution including a matrix or the like) different from each other can be appropriately mixed and reacted in the through-holes 2c. Therefore, the mass spectrometry method of the present embodiment is valid, for instance, in a case where measurement is performed after a plurality of solutions different from each other are reacted in the through-holes 2c (e.g., in a case where the matrix is added to the sample solution and is measured).

Further, in the mass spectrometry method of the present embodiment, the sample solution flowing into the through portions 3a is unlikely to exude from the side of the first surface 2a. For this reason, a phenomenon that the sample solution flowing out of the inside of the through-hole 2c provided corresponding to one through portion 3a exudes to the through-holes 2c provided corresponding to the other through portions 3a at the side of the first surface 2a (so-called crosstalk) is curbed.

Further, in the ionization method, a process of mounting the sample support 1 on the mounting surface 5a such that the second surface 2b faces the mounting surface 5a is performed between the end of the third process and the start of the fourth process. In this case, after the third process, the sample support 1 is inverted such that the second surface 2b is located below, and is then mounted on the mounting surface 5a. Thus, since the side of the first surface 2a can be exposed upward while stably supporting the sample support 1 through the holding substrate 5, the application of the laser beam L can be appropriately performed in the fourth process.

Further, in the sample support 1 used in the ionization method, the plurality of measurement regions R separated from each other when viewed in the thickness direction of the substrate 2 are provided. The plurality of through-holes 2c are formed in the plurality of measurement regions R, respectively. In the second process, the sample solution is dropped onto each of the plurality of measurement regions R on the second surface 2b. In the fourth process, the laser beam L is applied to each of the measurement regions R, and the components S1 of the sample S are ionized in each of the measurement regions R. In this way, the sample support 1 in which the plurality of measurement regions R are formed is used, and thus ionization and measurement of a plurality of samples (i.e., the sample solution dropped onto each of the measurement regions R) can be efficiently performed using the plurality of measurement regions R. That is, since the plurality of samples can be set on one sample support 1 (one substrate 2) at the same time, mass analysis results (mass analysis results of each of the measurement regions R) of the plurality of samples can be efficiently obtained.

Further, the sample support 1 used in the ionization method includes the frame 3 that supports the substrate 2 at the side of the second surface 2b, and the plurality of through portions 3a passing through the frame 3 in the thickness direction of the frame 3 in correspondence to the plurality of measurement regions R are formed in the frame 3. According to this frame 3, handleability of the sample support 1 can be improved. To be specific, since deformation of the substrate 2 is curbed by the frame provided integrally with the substrate 2, bending of the substrate 2 can be prevented, for instance, when the sample support 1 is supported or inverted by the supporting mechanism 16 as described above. Further, since the plurality of measurement regions R are partitioned by the frame 3 (see FIG. 1), the sample solution can be easily dropped onto each of the measurement regions R in the second process. For example, in a case where an operator manually drops the sample solution, the operator can easily identify the measurement regions R using the through portions 3a of the frame 3 as marks. As in the embodiment, even in a case where the sample solution is mechanically dropped by the sample dropper 17, the following effects, for instance, are produced. That is, the side of the second surface 2b of the sample support 1 is imaged by an imaging part (e.g., a camera) (not illustrated), and the controller 18 analyzes an image imaged by the imaging part, recognizes positions corresponding to the through portions 3a, and thus can accurately adjust the sample dropping position.

Further, in the sample support 1, the conductive layer 4 having a lower affinity with water than the second surface 2b is provided on the first surface 2a. For this reason, for example, the sample solution is dropped onto the second surface 2b, and thus the sample solution can be made to smoothly flow into the through-holes 2c, compared to the case where the sample solution is dropped onto the first surface 2a (the conductive layer 4). Further, due to the conductive layer 4 provided on the first surface 2a, the components S1 of the sample S can be dried while curbing outflow of the sample solution from the side of the first surface 2a. Thus, since the components S1 of the sample S can be appropriately introduced into the through-holes 2c, the signal intensity can be improved when the components S1 ionized by the application of the laser beam L are detected. Further, in the sample support 1, due to the frame 3 provided at the side of the second surface 2b, the handleability of the sample support 1 is improved. Furthermore, the plurality of measurement regions R are partitioned by the frame 3, and thus the sample solution can be easily dropped onto each of the measurement regions R. Therefore, according to the sample support 1, the plurality of samples (i.e., the sample solution dropped onto each of the measurement regions R) can be efficiently and easily ionized.

### [Second embodiment]

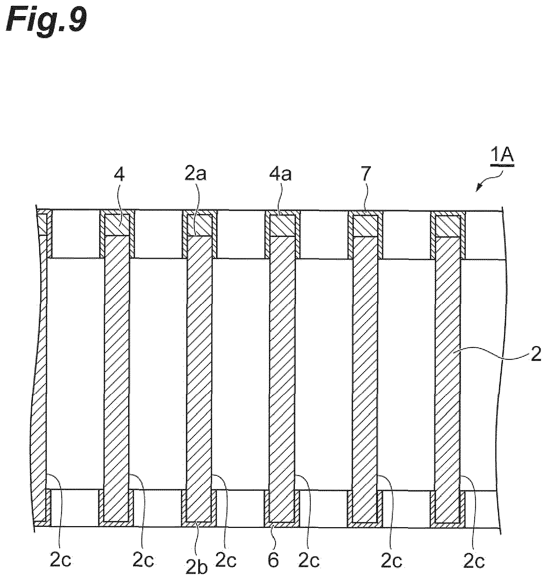

As illustrated in FIG. 9, in the above first process, a sample support 1A may be prepared instead of the sample support 1. The sample support 1A is different from the sample support 1 in that a hydrophilic coating layer 6 is provided on the second surface 2b of the substrate 2 and an inner surface of a portion including an edge of each through-hole 2c on the second surface 2b side. Further, the sample support 1A is different from the sample support 1 in that a hydrophobic coating layer 7 having a lower affinity with water than the conductive layer 4 is provided on a surface 4a of the conductive layer 4 which is located at the side opposite to the substrate 2. The other configurations of the sample support 1A are the same as the sample support 1.

The hydrophilic coating layer 6 is provided in a region corresponding to at least the measurement regions R. The coating layer 6 is a layer formed, for instance, by forming a film of titanium oxide (TiO₂) or zinc oxide (ZnO). The coating layer 6 is formed, for instance, by an atomic layer deposition method. A thickness of the coating layer 6 is, for instance, 1 nm to 50 nm. Further, a portion (i.e., a portion entering into each through-hole 2c) of the coating layer 6 which is along the inner surface of the portion including the edge of each through-hole 2c on the second surface 2b side has a width (a length in the thickness direction of the substrate 2) of, for instance, 1 nm to 1000 nm.

The hydrophobic coating layer 7 is provided in a region corresponding to at least the measurement regions R. The coating layer 7 is a layer (a metal film) formed, for instance, by vapor deposition of a metal. The coating layer 7 is formed of a material having a lower affinity with water than the conductive layer 4. For example, Au can be used as the material of the coating layer 7. Alternatively, the coating layer 7 may be a layer formed of a self-assembled monolayer (SAM). In the present embodiment, as an example, the coating layer 7 is provided on the surface of the conductive layer 4 which is located at the side opposite to the substrate 2, and has a portion entering into each through-hole 2c. However, the coating layer 7 may be provided on at least the surface of the conductive layer 4 which is located at the side opposite to the substrate 2, and may not have the portion entering into each through-hole 2c. A thickness of the coating layer 7 is, for instance, 1 nm to 100 nm.

Due to the hydrophilic coating layer 6, inflow of a sample solution, which is dropped onto the second surface 2b, into the through-holes 2c can be effectively accelerated. That is, in the above second process, the sample solution dropped onto the second surface 2b (on the coating layer 6) easily flows into each through-hole 2c along the coating layer 6. That is, the coating layer 6 serves to appropriately guide the sample solution on the second surface 2b side into each through-hole 2c. Thus, the components S1 of the sample S can be made to appropriately flow into each through-hole 2c. As a result, signal intensity when the ionized components S1 are detected can be further improved.

Due to the hydrophobic coating layer 7, outflow of the sample solution from the side of the first surface 2a can be effectively curbed. That is, in the above second and third processes, the sample solution intended to flow out of an opening of each through-hole 2c on the first surface 2a side is difficult to flow out to the outside along the first surface 2a (along the coating layer 7). That is, the coating layer 7 serves to prevent the sample solution inside each through-hole 2c from flowing out to the outside along the first surface 2a. Thus, outflow of the components S1 of the sample S flowing into each through-hole 2c from the side of the first surface 2a can be curbed, and the components S1 can be appropriately left in each through-hole 2c. As a result, the components S1 of the sample S can be concentrated in each through-hole 2c, and the signal intensity when the ionized components S1 are detected can be further improved.

In the second embodiment, the sample support 1A including both the coating layer 6 and the coating layer 7, and the ionization method using the sample support 1A have been described. However, in the ionization method, the sample support including only any one of the coating layer 6 and the coating layer 7 may be prepared in the first process. In that case, the aforementioned effects appropriate for the coating layer 6 or the coating layer 7 which the sample support includes can be obtained.

### [Third embodiment]

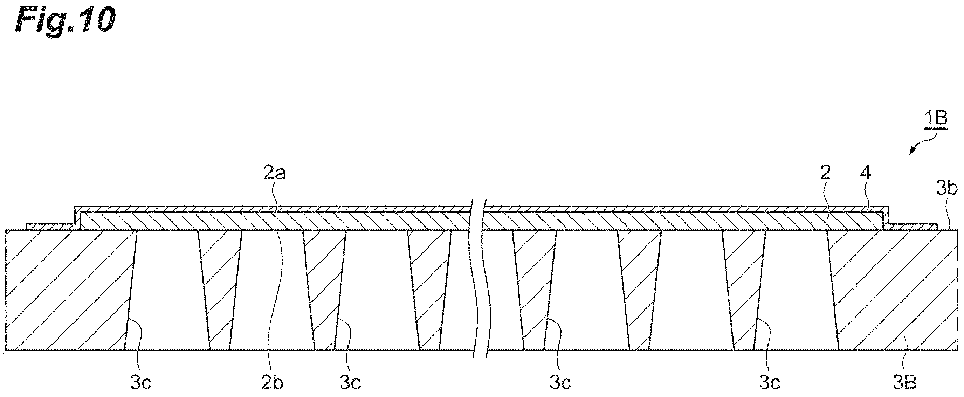

As illustrated in FIG. 10, in the above first process, a sample support 1B may be prepared instead of the sample support 1. The sample support 1B is different from the sample support 1 in that the frame 3 is replaced with a frame 3B. The other configurations of the sample support 1B are the same as the sample support 1.

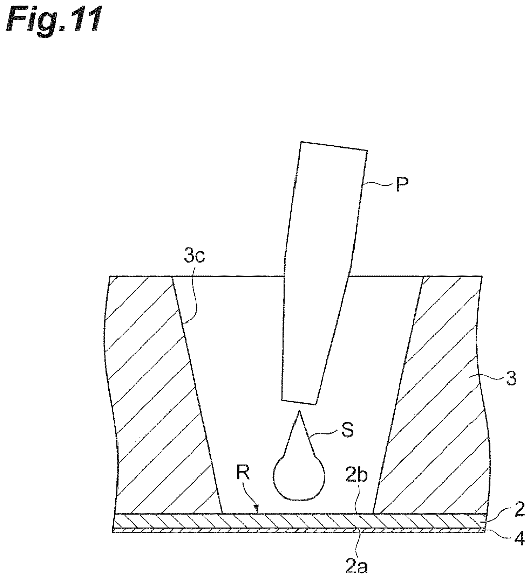

The frame 3B is different from the frame 3 in that through portions 3c are provided instead of the through portions 3a. The other configurations of the frame 3B are the same as the frame 3. The through portions 3c have tapered shapes in which widths thereof are widened as they go away from the second surface 2b of the substrate 2. Thus, in comparison with a case where the through portions do not have the tapered shapes (e.g., a case where the through portions have pillar shapes like the through portions 3a of the frame 3), openings of the through portions 3c at the side at which the sample solution is dropped can be expanded. As a result, accuracy required when the sample solution is dropped in the second process (accuracy relevant to a dropping position) can be relieved. To be specific, as illustrated in FIG. 11, to easily advance the tip of the pipette P into the through portion 3c, the sample solution is easily dropped onto the measurement region R. Further, in a case where the tip of the pipette P is positioned above the through portion 3c (i.e., without advancing the tip of the pipette P into the through portion 3c) and drops the sample solution, even if a position of the tip of the pipette P deviates somewhat from a target position (e.g., a central position of the measurement region R when viewed in the thickness direction of the substrate 2), the sample solution hints on a side of the through portion 3c, and is introduced into the measurement region R by a gravitational force.

While the embodiments of the present disclosure have been described, the present disclosure is not limited to the above embodiments, and can be variously modified without departing from the spirit and scope of the present disclosure.

For example, the aforementioned substrate 2 may have conductivity, and a voltage may be applied to the substrate 2 in the ionization method. Further, in the case where the substrate 2 has conductivity, the conductive layer 4 can be omitted in the sample support, and the same effects as the case where the sample support including the aforementioned conductive layer 4 is used can be obtained. In this case, such surface treatment that a surface on the first surface 2a side has a lower affinity with water than a surface on the second surface 2b side may be performed on the substrate 2. For example, the aforementioned hydrophilic coating layer 6 may be provided on the second surface 2b of the substrate 2 having conductivity and the inner surface of the portion including the edge of each through-hole 2c on the second surface 2b side. In this case, as described above, the inflow of the sample solution dropped onto the second surface 2b into the through-holes 2c in the second process can be accelerated. Further, the hydrophobic coating layer 7 may be provided on the first surface 2a of the substrate 2 having conductivity. In this case, as described above, the outflow of the sample solution moved inside the through-holes 2c to the side of the first surface 2a in the second and third processes can be curbed.

Further, in the aforementioned embodiment, the sample support 1 is inverted from the state in which the second surface 2b is located above to the state in which the first surface 2a is located above between the third process and the fourth process, but the treatment of inverting the sample support 1 may be omitted. For example, in such a case that the sample support 1 is supported by the supporting mechanism 16 and the laser beam L is applied from below in the state in which the second surface 2b is located above, the treatment of inverting the sample support 1 and the treatment of mounting the sample support 1 on the mounting surface of the mounting portion may be omitted.

Further, when the mass spectrometry method is performed by the mass spectrometer 10, the sample support 1 may be directly mounted and fixed on and to the support 12. That is, the holding substrate 5 may be omitted. In this case, the support 12 functions as the mounting portion, and the upper surface of the support 12 functions as the mounting surface.

Further, in the aforementioned embodiments, the plurality of measurement regions R are regulated by the plurality of through portions 3a of the frame 3 (or the plurality of through portions 3c of the frame 3B), but the number of measurement regions R (i.e., the number of through portions 3a or the number of through portions 3c) may be one.

Further, the aforementioned ionization method for the sample can be used in the mass spectrometry of the molecules of which the sample S is composed as well as other measurement such as ion mobility measurement and other experiments.

Further, in the aforementioned embodiments, the laser beam L is used as the energy beam for ionizing the sample, but the energy beam is not limited to the laser beam L, and may be, for instance, an ion beam, an electron beam, or the like.

### Reference Signs List

1, 1A, 1B Sample support
2 Substrate
2a First surface
2b Second surface
2c Through-hole
3, 3B Frame (supporting substrate)
3a, 3c Through portion
4 Conductive layer
5 Holding substrate (mount)
5a Mounting surface
6 Coating layer (hydrophilic coating layer)
7 Coating layer (hydrophobic coating layer)
L Laser beam (energy beam)
R Measurement region
S Sample
S1 Component
S2 Sample ion

## Claims

1. An ionization method comprising:
a first process of preparing a sample support that includes a substrate formed with a plurality of through-holes opening to a first surface and a second surface opposite to each other, and a conductive layer that is provided on at least the first surface and has a lower affinity with water than the second surface;
a second process of dropping a solution including a sample to the second surface in a state in which the sample support is supported such that the second surface is located above the first surface;
a third process of moving components of the sample from a side of the second surface into the plurality of through-holes in the state in which the sample support is supported such that the second surface is located above the first surface, and drying the components of the sample moved into the plurality of through-holes; and
a fourth process of applying an energy beam to the first surface while applying a voltage to the conductive layer, and thus ionizing the components of the sample.

2. The ionization method according to claim 1, wherein the first process includes preparing the sample support in which a hydrophilic coating layer is provided on the second surface and an inner surface of a portion including an edge of each through-hole on the second surface side.

3. The ionization method according to claim 1 or 2, wherein the first process includes preparing the sample support in which a hydrophobic coating layer having a lower affinity with water than the conductive layer is provided on a surface of the conductive layer which is located at a side opposite to the substrate.

4. An ionization method comprising:
a first process of preparing a sample support that includes a substrate which has conductivity and which is formed with a plurality of through-holes opening to a first surface and a second surface opposite to each other, wherein a surface of the sample support on the first surface side has a lower affinity with water than a surface of the sample support on the second surface side;
a second process of dropping a solution including a sample to the second surface in a state in which the sample support is supported such that the second surface is located above the first surface;
a third process of moving components of the sample from a side of the second surface into the plurality of through-holes in the state in which the sample support is supported such that the second surface is located above the first surface, and drying the components of the sample moved into the plurality of through-holes; and
a fourth process of applying an energy beam to the first surface while applying a voltage to the substrate, and thus ionizing the components of the sample.

5. The ionization method according to claim 4, wherein the first process includes preparing the sample support in which a hydrophilic coating layer is provided on the second surface and an inner surface of a portion including an edge of each through-hole on the second surface side.

6. The ionization method according to claim 4 or 5, wherein the first process includes preparing the sample support in which a hydrophobic coating layer is provided on the first surface.

7. The ionization method according to any one of claims 1 to 6, wherein:
the sample support is provided with a plurality of measurement regions that are separated from one another when viewed in a thickness direction of the substrate;
the plurality of through-holes are formed in each of the plurality of measurement regions;
the second process includes dropping the solution including the sample to the plurality of measurement regions on the second surface; and
the fourth process includes applying the energy beam to each of the measurement regions, and ionizing the components of the sample in each of the measurement regions.

8. The ionization method according to claim 7, wherein:
the sample support includes a supporting substrate that supports the substrate at the side of the second surface; and
the supporting substrate includes a plurality of through portions passing through the supporting substrate in a thickness direction of the supporting substrate in correspondence to the plurality of measurement regions.

9. The ionization method according to claim 8, wherein the through portions have tapered shapes in which widths thereof widen as they go away from the second surface.

10. The ionization method according to any one of claims 1 to 9, further comprising a process of mounting the sample support on a mounting surface of a mounting portion such that the second surface faces the mounting surface between an end of the third process and a start of the fourth process.

11. A sample support comprising:
a substrate formed with a plurality of through-holes opening to a first surface and a second surface opposite to each other;
a conductive layer that is provided on at least the first surface and has a lower affinity with water than the second surface; and
a supporting substrate configured to support the substrate at a side of the second surface,
wherein the supporting substrate includes a plurality of through portions passing through the supporting substrate in a thickness direction of the supporting substrate in correspondence to a plurality of measurement regions that are separated from one another when viewed in a thickness direction of the substrate, and
the plurality of measurement regions are regions including the plurality of through-holes when viewed in the thickness direction of the substrate.

12. A sample support comprising:
a substrate which has conductivity and is formed with a plurality of through-holes opening to a first surface and a second surface opposite to each other; and
a supporting substrate configured to support the substrate at a side of the second surface,
wherein a surface of the sample support on the first surface side has a lower affinity with water than a surface of the sample support on the second surface side,
the supporting substrate includes a plurality of through portions corresponding to a plurality of measurement regions that are separated from one another when viewed in a thickness direction of the substrate, and
the plurality of measurement regions are regions including the plurality of through-holes when viewed in the thickness direction of the substrate.

13. The sample support according to claim 11 or 12, wherein the through portions have tapered shapes in which widths thereof widen as they go away from the second surface.
